(19) **Europäisches Patentamt / European Patent Office / Office européen des brevets**

(11) **EP 4 769 574 A1**

(12) **EUROPEAN PATENT APPLICATION**
published in accordance with Art. 153(4) EPC

(43) Date of publication:
01.07.2026 Bulletin 2026/27

(21) Application number: 25831205.7

(22) Date of filing: 18.06.2025

(51) International Patent Classification (IPC):
$H01M\ 4/62^{(2006.01)}$    $C01B\ 32/158^{(2017.01)}$
$H01M\ 4/13^{(2010.01)}$    $H01M\ 10/052^{(2010.01)}$
$H01M\ 4/04^{(2006.01)}$    $C01B\ 32/174^{(2017.01)}$
$H01M\ 4/136^{(2010.01)}$    $H01M\ 4/02^{(2006.01)}$

(52) Cooperative Patent Classification (CPC):
C01B 32/158; C01B 32/174; H01M 4/02;
H01M 4/04; H01M 4/13; H01M 4/131; H01M 4/136;
H01M 4/62; H01M 10/052; Y02E 60/10

(86) International application number:
PCT/KR2025/008441

(87) International publication number:
WO 2025/263995 (26.12.2025 Gazette 2025/52)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 18.06.2024 KR 20240079211
18.06.2024 KR 20240079212

(71) Applicant: **LG Energy Solution, Ltd.**
**Seoul 07335 (KR)**

(72) Inventors:
• **BAEK, Doo Hyun**
**Daejeon 34122 (KR)**
• **RYU, Ho Hyeon**
**Daejeon 34122 (KR)**

• **JANG, Eun Ji**
**Daejeon 34122 (KR)**
• **LEE, Nam Jeong**
**Daejeon 34122 (KR)**
• **SHIN, Dong Mok**
**Daejeon 34122 (KR)**
• **LEE, Ki Seok**
**Daejeon 34122 (KR)**
• **LEE, Ho Chan**
**Daejeon 34122 (KR)**
• **CHUNG, Koo Seung**
**Daejeon 34122 (KR)**
• **KWON, Soon Hyung**
**Daejeon 34122 (KR)**

(74) Representative: **Hoffmann Eitle**
**Patent- und Rechtsanwälte PartmbB**
**Arabellastraße 30**
**81925 München (DE)**

(54) **DRY ELECTRODE AND LITHIUM SECONDARY BATTERY COMPRISING SAME**

(57) The present invention relates to a dry electrode including a current collector; and an electrode material mixture film, wherein the electrode material mixture film includes an electrode active material, a conductive agent, and a binder having a three-dimensional fiber network structure, and the electrode material mixture film has an OMI (Overlap Mapping Index) represented by Equation 1 according to the present invention of 17 or more.

[FIG. 1]

**Description**

**TECHNICAL FIELD**

**Cross-reference to Related Applications**

This application claims priority from Korean Patent Application Nos. 10-2024-0079211, filed on June 18, 2024, and 10-2024-0079212, filed on June 18, 2024, the disclosures of which are incorporated by reference herein.

**Technical Field**

The present invention relates to a dry electrode and a lithium secondary battery including the same.

**BACKGROUND ART**

Secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup whichstore surplus generated power or renewable energy.

Typically, a secondary battery is prepared by a method in which, after an electrode active material layer is formed by coating a positive electrode collector and a negative electrode collector with an electrode active material slurry, a positive electrode and a negative electrode are prepared through drying and rolling processes, an electrode assembly having a predetermined shape is formed by stacking the positive electrode and the negative electrode on both sides of a separator and is then accommodated in a battery case, and the battery case is sealed after an electrolyte is injected.

During the process of drying the electrode active material slurry, defects, such as pinholes or cracks, may occur in the electrode active material layer formed on the current collector as a solvent contained in the slurry evaporates. Also, since the inside and outside of the electrode active material slurry are not uniformly dried during the drying process, there is a concern that quality of the electrode is degraded due to a powder floating phenomenon caused by a difference in evaporation rate of the solvent, in which particles in a region dried first move upward to form a gap with a region dried relatively later.

To solve the above problem, drying devices capable of controlling the evaporation rate of the solvent are being considered so that the inside and outside of the electrode active material slurry may be uniformly dried, but since these drying devices are very expensive and require considerable cost and time to operate, they have disadvantages in terms of manufacturability.

On the other hand, the solvent contained in the conventional electrode active material slurry is N-methyl-2-pyrrolidone (NMP), wherein, since it has a high boiling point, high thermal energy and a very long drying furnaceare required to dry it, and thus, it is very disadvantageous for mass production. Also, since the N-methyl-2-pyrrolidone (NMP) is a toxic substance and harmful to living organisms, it has adisadvantage of not being environmentally friendly.

Accordingly, research on a dry electrode, in which an electrode is prepared without using a solvent, has been actively conducted recently. The dry electrode is generally prepared by laminating a free-standing type electrode material mixture film, which includes an electrode active material, a binder, or a conductive agent and is prepared in a form of a sheet, on a current collector. The electrode material mixture film is prepared by a process in which, first, an electrode active material, a carbon material as a conductive agent, and a fibrillizable binder are mixed together using a blender or the like, the binder is fibrillized by applying a shear force through a process such as jet-milling or kneading, and a free-standing film is then prepared by calendering the obtained mixture into a film shape.

However, during the preparation of the dry electrode, since the electrode active material, the conductive agent, and the fibrillizable binder are mixed in a solvent-free state unlike a wet electrode in which the electrode active material, the conductive agent, and the fibrillizable binder are mixed in a solvent, there is a problem in that dispersibility of the fibrillizable binder and the conductive agent is poor. For example, if the conductive agent is locally aggregated or is not sufficiently mixed with the binder, a delamination phenomenon may occur because mechanical strength of the electrode material mixture film may be decreased or adhesion to the current collector may be reduced, and there is a problem in that electrical resistance increases or conductivity uniformity deteriorates because an electrical conductive path is not continuously and sufficiently secured.

Thus, there is a need for a dry electrode that is formed by balancing constituent materials in the electrode material mixture film.

**DISCLOSURE OF THE INVENTION**

**TECHNICAL PROBLEM**

An aspect of the present invention provides a dry electrode having excellent processability and excellent life and output characteristics as well as excellent mechanical strength of an electrode material mixture film by controlling the electrode material mixture film such that an OMI (Overlap Mapping Index) represented by Equation 1 according to the present invention satisfies a specific range.

TECHNICAL SOLUTION

[1] The present invention provides a dry electrode including a current collector; and an electrode material mixture film, wherein the electrode material mixture film includes an electrode active material, a conductive agent, and a binder having a three-dimensional fiber network structure, and the electrode material mixture film has an overlap mapping index (OMI) represented by Equation 1 of 17 or more.

$$[\text{Equation 1}]$$

$$\text{OMI} = \{(\text{CFAR})/(\text{FAR})\} \times 100$$

In Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using scanning electron microscopy-energy dispersive X-Ray spectroscopy(SEM-EDS), and FAR is an area ratio of pixel regions in which 15 wt% or more of the fluorine element is detected when analyzing the element contents within the pixels of the cross section of the electrode material mixture film using the SEM-EDS.
[2] The dry electrode of [1] above, wherein the electrode material mixture film may have the OMI represented by Equation 1 of 23 to 27.

$$[\text{Equation 1}]$$

$$\text{OMI} = \{(\text{CFAR})/(\text{FAR})\} \times 100$$

In Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using scanning electron microscopy-energy dispersive X-Ray spectroscopy (SEM-EDS), and FAR is an area ratio of pixel regions in which 15 wt% or more of the fluorine element is detected when analyzing the element contents within the pixels of the cross section of the electrode material mixture film using the SEM-EDS.
[3] The dry electrode of [1] or [2] above, wherein the CFAR may be in a range of 2% to 10%.
[4] The dry electrode of at least one of [1] to [3] above, wherein the FAR may be in a range of 1% to 20%.
[5] The dry electrode of at least one of [1] to [4] above, wherein the electrode material mixture film may have a tensile strength of 0.30 MPa to 0.70 MPa.
[6] The dry electrode of at least one of [1] to [5] above, wherein the electrode material mixture film may have an elongation of 1.5% to 5.5%.
[7] The dry electrode of at least one of [1] to [6] above, wherein the electrode material mixture film may have an electrode layer resistivity of 500 $\Omega$cm or less.
[8]The dry electrode of at least one of [1] to [7] above, wherein the electrode material mixture film may have an interfacial resistivity of 9 x $10^{-1}$ $\Omega$cm$^2$ or less.
[9]The dry electrode of at least one of [1] to [8] above, wherein the conductive agent may include expandable carbon nanotubes.
[10]The dry electrode of at least one of [1] to [9] above, wherein the expandable carbon nanotube may include a multi-walled carbon nanotube unit.
[11] The dry electrode of at least one of [1] to [10] above, wherein an average diameter of the multi-walled carbon nanotube unit may be in a range of 5 nm to 200 nm.

[12] The dry electrode of at least one of [1] to [11] above, wherein a Brunauer-Emmett-Teller (BET) specific surface area of the multi-walled carbon nanotube unit may be in a range of 50 $m^2/g$ to 500 $m^2/g$.

[13] The dry electrode of at least one of [1] to [12] above, wherein the multi-walled carbon nanotube unit may have three or more graphene layers arranged in parallel with respect to an axis of the multi-walled carbon nanotube unit.

[14] The present invention provides a lithium secondary battery including the dry electrode of at least one of [1] to [13] above.

## ADVANTAGEOUS EFFECTS

A dry electrode according to the present invention forms a uniform three-dimensional fiber network structure while forming a uniform conductive network by controlling an OMI represented by Equation 1 according to the present invention of an electrode material mixture film to be 17 or more, and simultaneously maintains mechanical strength of the electrode material mixture film above a certain level through interaction between a conductive agent and a binder having a three-dimensional fiber network structure. Due to the above-described characteristics, the dry electrode according to the present invention may achieve high uniformity of the conductive network while achieving excellent mechanical strength and excellent electrical conductivity.

## BRIEF DESCRIPTION OF THE DRAWINGS

The accompanying drawings illustrate preferred embodiments of the present invention, and together with the detailed description, serve to provide an explanation of the principle of the present invention, but not intended to limit the scope of the present invention thereto. On the other hand, the shape, size, scale or proportion of elements in the drawings as stated herein may be exaggerated for clarity.

FIG. 1 is an example in which, after preparing a cross-sectional sample by ion milling a dry electrode, pixels with a carbon element content of 30 wt% or more are indicated as white regions through scanning electron microscopy-energy dispersive X-Ray spectroscopy(SEM-EDS)analysis.

FIG. 2 is an example in which, after preparing a cross-sectional sample by ion milling a dry electrode, pixels with a fluorine element content of 15 wt% or more are indicated as white regions through SEM-EDS analysis.

FIG. 3 is an example in which, after preparing a cross-sectional sample by ion milling a dry electrode, pixels with acarbon element content of 30 wt% or more and a fluorine element content of 15 wt% or more are indicated as white regions through SEM-EDS analysis.

FIGS. 4 and 6 are scanning electron microscope (SEM) images of densely packed carbon nanotubes.

FIGS. 5 and 7 are SEM images of expandable carbon nanotube powders.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In this specification, a "volume cumulative average particle diameter $D_{50}$" means a particle diameter at a cumulative volume of 50% in a particle size distribution curve of particles. The $D_{50}$, for example, may be measured by using a laser diffraction method. The laser diffraction method may generally measure a particle diameter ranging from a submicron level to a few mm and may obtain highly repeatable and high-resolution results.

In this specification, an"average particle diameter" means an arithmetic mean value of particle diameters which is calculated after measuring the particle diameters of at least 30 particles observed in a scanning electron microscope image when observed by using a scanning electron microscope with a field of view of 5,000 times to 20,000 times. In this case, the particle diameter refers to a diameter of the longest axis of the particle. Although measurement methods of the "volume cumulativeaverage particle diameter $D_{50}$" and the "average particle diameter" are different, their values may be derived similarly, and the volume cumulative average particle diameter $D_{50}$ measured in a powder state may have a similar value within an error range to the average particle diameter observed in the scanning electron microscope image of an electrode after the powder is prepared into the electrode.

In this specification, a "material mixture composition" means a mixture including an electrode active material as well as a binder and optionally a conductive agent, which is physically mixed to form a uniform dispersion phase, wherein it may be a mixture of powders, as a product of a mixing process according to this specification, and may be one in which substantially no solvent is involved. Herein, the fact that substantially no solvent is involved means that no solvent or only a trace amount of solvent is added when mixing the material mixture composition.

In this specification, a "mixed aggregate" refers to one in which the mixture of powders is converted into a dough-like aggregate by being bonded or connected to each other while the binder is fibrillized by applying a shear force to the material mixture composition, wherein it, as a product of a kneading process according to this specification, may have a solid content substantially close to 100% and may include a small amount of solvent in some cases.

In this specification, "powder for an electrode" is a material in a state in which the mixed aggregate is ground to form powder by reducing a size of particles, wherein it may mean an electrode material in a form of powder which includes the electrode active material as well as the binder and optionally the conductive agent.

In this specification, the "electrode material mixture film" may be one which is prepared in a form of a free standing type single sheet using an "electrode material mixture" including the electrode active material, the conductive agent, and the binder without a solvent involved, or may mean an electrode material mixture layer in a state of being laminated on the current collector. The expression 'free standing type' in this specification means that it may maintain its form independently without relying on other members and may be moved or handled on its own. The electrode material mixture film may be formed by pressing the powder for an electrode as described later. For example, the powder for an electrode may be integrated by pressing to form a layered structure.

In this specification, a "powder-sheeting film" means a film after a sheet form is formed through a powder-sheeting process in which the powder for an electrode first passes through a calender roll in a roll-to-roll process (e.g., calendering process) and before passing through a last calender roll in the roll-to-roll process, wherein it may be a free standing type sheet, but may be a sheet with relatively weak self-supporting ability. Herein, the 'powder-sheeting' means that the powder for an electrode is formed into the form of a free standing type sheet by the calender roll of the roll-to-roll process, and 'sheeting' is a process performed in a process of preparing the electrode material mixture film from the powder-sheeting film, wherein it may mean a process of roll pressing the powder-sheeting film.

In this specification, a "three-dimensional fiber network structure" may mean a structure that may be formed by fibrillization of a binder during a process of forming a sheet into an electrode material mixture film from a material mixture composition including an electrode active material and the binder. Specifically, the three-dimensional fiber network structure may mean various structures in which fine fibers formed by the fibrillization of the binder form a skeleton and may function as a support that enables the electrode material mixture film to be a free-standable film through this. In this case, the electrode active material and optionally a conductive agent may be accommodated in pores formed in the three-dimensional fiber network structure.

In this specification, porosity may be calculated by Equation A below.

$$\text{Porosity (\%)} = \{1 - (\text{electrode density/true density})\} \times 100 \qquad \text{[Equation A]}$$

In Equation A, the true density is calculated density derived from density and mass ratio of each component material constituting the electrode material mixture film, assuming that no pores are included, and the electrode density is measured density of the electrode material mixture film which is measured by sampling the electrode material mixture film of a predetermined size.

In this specification, a "specific surface area ($m^2/g$)" is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

In this specification, a MD direction (Machine Direction) means a longitudinal direction of the electrode material mixture film, and a TD direction (Transverse Direction) means a width direction of the electrode material mixture film.

During preparation of a dry electrode, since the electrode active material, the conductive agent, and the fibrillizable binder are mixed in a solvent-free state unlike a wet electrode in which the electrode active material, the conductive agent, and the fibrillizable binder are mixed in a solvent, there is a problem in that dispersibility of the fibrillizable binder and the conductive agent is poor. For example, if the conductive agent is locally aggregated, since an electrically conductive path is not sufficiently secured or durability of the electrically conductive path is weakened, electrical resistance increases, and there is a problem in that uniformity of the conductive network is reduced because the electrically conductive path is not formed uniformly and continuously. Mechanical strength of the electrode material mixture film decreases as the dispersibility of the binder decreases, and a problem of reduction in uniformity of the three-dimensional fiber network of the binder occurs.

As a result of continuous research conducted to solve such problems, the present inventors have found that a dry electrode having excellent electrical conductivity and high uniformity of a conductive network while maintaining mechanical strength of an electrode material mixture film above a certain level may be provided by controlling the electrode material mixture film such that an OMI (Overlap Mapping Index) represented by Equation 1 according to the present invention satisfies a specific range, thereby leading to the completion of the present invention.

**Dry Electrode**

A dry electrode according to the present invention includes: a current collector; and an electrode material mixture film, wherein the electrode material mixture film includes an electrode active material, a conductive agent, and a binder having a three-dimensional fiber network structure, and the electrode material mixture film has an OMI represented by Equation 1 of 17 or more.

$$[Equation\ 1]$$

$$OMI = \{(CFAR)/(FAR)\} \times 100$$

In Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using scanning electron microscopy-energy dispersive X-Ray spectroscopy(SEM-EDS), and FAR is an area ratio of pixel regions in which 15 wt% or more of the fluorine element is detected when analyzing the element contents within the pixels of the cross section of the electrode material mixture film using the SEM-EDS.

The OMI is measured by commonly used SEM-EDS. For example, Apreo2S (Thermo Fisher Scientific Inc.) may be used for the SEM, and Extreme (Oxford Instruments) may be used for the EDS.

For example, for a dry electrode, after a cross-sectional sample is prepared by ion milling using IM5000 by Hitachi High-Tech Corporation, a cross section of an electrode material mixture film in the cross section of the dry electrode may be measured by the SEM-EDS to measure aregion where a specific element is distributed, and to measure a content of each of elements present in one pixel, and specifically through SEM-EDS analysis, in a case in which a certain content or more of a specific element is included within one pixel, the pixels may be indicated as white regions.

In this case, observation conditions may include an accelerating voltage of 3 kV, a magnification of 3000x, and 1024 pixels x 400 pixels, but the number of pixels measured may vary depending on a size and/or a thickness of the electrode material mixture film. Also, the detected elements measured during the SEM-EDS analysis may be carbon (C), oxygen (O), fluorine (F), and nickel (Ni), and it is acceptable for other trace elements to be additional detected. With respect to the content of the specific element included within one pixel, the content of the specific element may be determined based on a total weight of the detected elements included within one pixel. In this case, a size of one pixel may be 135 nm $\times$ 135 nm, but may vary depending on the magnification.

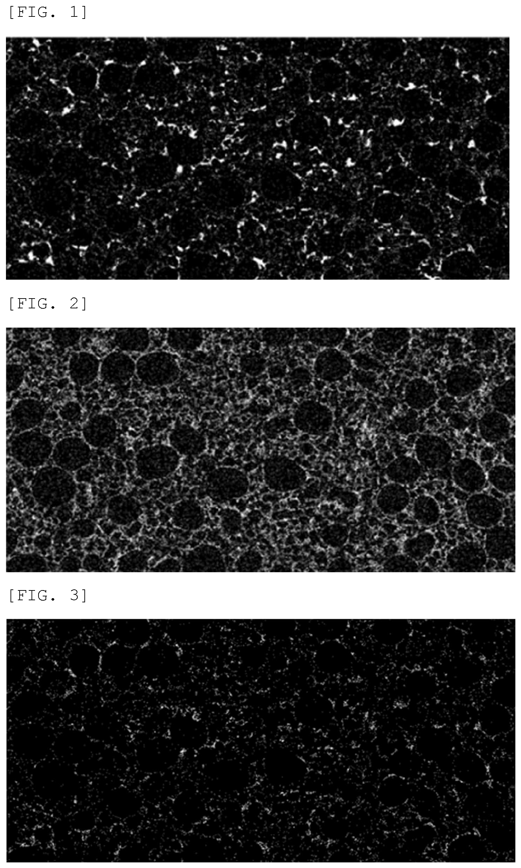

Referring to FIG. 1, after preparing a cross-sectional sample by ion milling a dry electrode, it may be understood that pixels with a carbon element content of 30 wt% or more within one pixel may be indicated as white regions through SEM-EDS analysis. Through such processing, an area ratio of the white regions to a total area may be obtained.

Referring to FIG. 2, after preparing a cross-sectional sample by ion milling a dry electrode, it may be understood that pixels with a fluorine element content of 15 wt% or more within one pixel may be indicated as white regions through SEM-EDS analysis. Through such processing, an area ratio of the white regions to a total area may be obtained.

Referring to FIG. 3, after preparing a cross-sectional sample by ion milling a dry electrode, it may be understood that pixels with a carbon element content of 30 wt% or more and a fluorine element content of 15 wt% or more within one pixel may be indicated as white regions through SEM-EDS analysis. Through such processing, an area ratio of the white regions to a total area may be obtained.

Since no solvent is used during the preparation of the dry electrode, dispersing and buffering actions of the solvent, which may be expected in a wet process, may not be expected. As a result, since strong cohesion between constituent particles included in the electrode material mixture film is not alleviated, problems, such as local aggregation of the conductive agent or insufficient mixing with the binder, occur.

Accordingly, the present invention aims to achieve excellent electrical conductivity and high uniformity of a conductive network while maintaining mechanical strength of the electrode material mixture film above a certain level through formation of a uniform three-dimensional fiber network structure and interaction between the conductive agent and the binder having the three-dimensional fiber network structure at the same time while forming the uniform conductive network by controlling the electrode material mixture film to have the OMI represented by Equation 1 according to the present invention of 17 or more.

The electrode material mixture film according to the present invention has an OMI represented by Equation 1 below of 17 or more. Preferably, the OMI represented by Equation 1 may be 18 or more, 19 or more, 20 or more, 21 or more, 22 or more, or 23 or more, may be 40 or less, 39 or less, 38 or less, 37 or less, 36 or less, 35 or less, 34 or less, 33 or less, 32 or less, 31 or less, 30 or less, 29 or less, 28 or less, or 27 or less, and may more preferably be in a range of 23 to 27.

[Equation 1]

$$OMI = \{(CFAR)/(FAR)\} \times 100$$

In Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using SEM-EDS, and FAR is an area ratio of pixel regions in which 15 wt% or more of the fluorine element is detected when analyzing the element contents within the pixels of the cross section of the electrode material mixture film using the SEM-EDS.

The OMI is a ratio of the area ratio (CFAR) of the regions in which 30 wt% or more of the carbon element and 15 wt% or more of the fluorine element are simultaneously detected to the area ratio (FAR) of the regions in which 15 wt% or more of the fluorine element is detected within the electrode material mixture film, wherein it is a parameter that may represent a degree of formation of a robust network and spatial overlap between the conductive agent and the binder within the electrode material mixture film.

For example, with respect to the FAR (Fluorine Area Ratio) corresponding to a denominator, since it means the region where 15 wt% or more of the fluorine element is detected in the electrode material mixture film, it may mean a region of the binder that forms an overall three-dimensional fiber network structure in the electrode material mixture film.

Also, with respect to the CFAR (Carbon Fluorine Area Ratio) corresponding to a numerator, since it means the region where 30 wt% or more of the carbon element and 15 wt% or more of the fluorine element are detected simultaneously in the electrode material mixture film, it is a region where the carbon element included in the conductive agent overlaps with the fluorine element included in the binder, wherein it may mean a region where the binder having a three-dimensional fiber network distributed throughout the electrode material mixture film overlaps with the conductive agent forming the conductive network.

Accordingly, since the OMI may mean a ratio of an overlapped region between the binder having a three-dimensional fiber network distributed throughout the electrode material mixture film and the conductive agent forming the conductive network to a region of the binder having a three-dimensional fiber network distributed throughout the electrode material mixture film, it may indicate how well a degree of dispersion and interaction between the binder having a three-dimensional fiber network structure and the conductive agent forming the conductive network are achieved while meaning the dispersibility of the conductive agent and the binder within the electrode material mixture film.

In a case in which the OMI is less than 18, since the dispersibility of the conductive agent becomes poor due to reasons such as the local aggregation of the conductive agent, the uniformity of the conductive network within the electrode becomes poor and a problem of increased resistivity occurs.In such a case, when used as a battery later, local overcurrent or overreaction may occur in some regions so that degradation of the electrode may be intensified, and there is a problem in that electrochemical properties and processability are deteriorated because quality difference between the batteries increases while resistance is not uniform.

Thus, in a case in which the OMI satisfies the above-described range, since the conductive agent may form a conductive network uniformly and continuously while having excellent dispersibility, excellent resistance characteristics and resistance uniformity may be achieved, and the mechanical strength of the electrode material mixture film and adhesion between the current collector and the electrode material mixture film may be excellent because the binder forming the three-dimensional fiber network structure may be distributed throughout the electrode material mixture film. Also, since uniformity and rigidity of the binder having the three-dimensional fiber network are improved, excellent dispersibility of the binder may be achieved while the mechanical strength of the electrode material mixture film may be maintained above a certain level, and excellent processability may be achieved because the preparation of the electrode material mixture film may be facilitated by appropriately dispersing the binder having the three-dimensional fiber network. The above numerical range may be a unique numerical range of the dry electrode that is prepared through a process of mixing in a solvent-free state, kneading, and calendering, unlike the wet electrode that uses a solvent.

Since the region where 30 wt% or more of the carbon element is detected is measured instead of a region where simply the carbon element is measured, there is an advantage in that a region where the conductive agent is mainly distributed may be measured more clearly, and since the region where 15 wt% or more of the fluorine element is detected is measured instead of a region where simply the fluorine element is measured, there is an advantage in that the region of the binder forming the three-dimensional fiber network may be measured more clearly.

For example, in a case in which polytetrafluoroethylene (PTFE) is used as the binder, since the PTFE has a repeated fluorine (F)-carbon (C)-fluorine (F) structure, an amount of carbon (C) is derived as about 24 wt%. In contrast, since most conductive agents have an amount of carbon (C) close to 100 wt%, a conductive network region formed by the conductive agent may be clearly measured when measuring the region where 30 wt% or more of the carbon element is detected per pixel.

Also, since the PTFE does not clearly undergo fibrillization in a wet electrode, but in a dry electrode, the PTFE is appropriately fibrillized and forms a three-dimensional fiber network in a thinned state, the region of the binder forming the three-dimensional fiber network may be clearly measured only when the region where 15 wt% or more of the fluorine element is detected per pixel is measured. Particularly, with respect to the region where 15 wt% or more of the fluorine element is detected per pixel, a reaction region (X-ray interaction volume) of around 100 nm is shown when measured by SEM-EDS at an accelerating voltage of 3 kV, wherein, in this case, the appropriately fibrillized binder may be clearly measured only when 15 wt% or more of the fluorine element is detected per pixel.

The OMI may be controlled in various ways. For example, it may be controlled according to a composition of the electrode active material, the conductive agent, and the binder, amounts of the electrode active material, the conductive agent, and the binder, physical properties of the conductive agent, a method of preparing the electrode material mixture film, and a method of preparing the conductive agent, and may preferably be controlled according to the amounts of the electrode active material, the conductive agent, and the binder, and the composition, the preparation method, and the physical properties, such as a form (expandable),of the conductive agent.

Particularly, the numerical range of the OMI may be a numerical range that is uniquely exhibited in accordance with the dry electrode, rather than the wet electrode. For example, since the dry electrode is prepared in a virtually solvent-free state, the binder having a three-dimensional fibrous network structure is formed after the fibrillization of the binder and the conductive agent forms a conductive network also in the virtually solvent-free state, and thus, the numerical range may be a numerical range that is uniquely exhibited in accordance with the dry electrode, rather than the wet electrode.

Furthermore, the above-described numerical range may be reached by considering characteristics of the above-described dry electrode and dispersibility and/or network of the conductive agent and the binder having a three-dimensional fiber network structure, and it may be desirable that expandable carbon nanotubes are used as the conductive agent when considering the dispersibility and/or the network, but the present invention is not limited thereto.

Hereinafter, the present invention will be described in more detail.

**(Electrode Material Mixture Film)**

The dry electrode according to the present invention includes an electrode material mixture film.

The above electrode material mixture film includes an electrode active material, a conductive agent, and a binder having a three-dimensional fiber network structure. The electrode active material, the conductive agent, and the binder having a three-dimensional fiber network structure will be described later.

According to an embodiment of the present invention, the CFAR (Carbon Fluorine Area Ratio) may be in a range of 2% to 10%, may preferably be 2.0% or more, 2.1% or more, 2.2% or more, 2.3% or more, 2.4% or more, 2.5% or more, 2.6% or more, 2.7% or more, 2.8% or more, or 2.9% or more, may be 10% or less, 9% or less, 8% or less, 7% or less, 6% or less, 5% or less, 4% or less, 3.5% or less, or 3.1% or less, and may preferably be in a range of 2.9% to 3.1%. In a case in which the above range is satisfied, since the conductive agent forming the conductive network and the binder having the three-dimensional fiber network structure may be appropriately dispersed, local aggregation of the conductive agent or excessive thinning of the three-dimensional fiber network is prevented, and thus, the mechanical strength of the electrode material mixture film is increased while the network may be achieved with a conductive path maintaining continuity. Also, since the conductive agent and the binder may be appropriately overlapped, electrical connection between the well-dispersed conductive networks may be appropriately fixed by the binder, and thus, the mechanical strength may be above a certain level while resistivity of the electrode material mixture film is low and resistance uniformity is high. Therefore, when the electrode material mixture film according to the present invention is included in a battery, life characteristics and output characteristics may be excellent.

According to an embodiment of the present invention, the FAR (Fluorine Area Ratio) may be in a range of 1% to 20%, may preferably be 1% or more, 2% or more, 3% or more, 4% or more, 5% or more, 6% or more, 7% or more, 8% or more, 9% or more or 10% or more, may be 20% or less, 19% or less, 18% or less, 17% or less, 16% or less, 15% or less, or 14% or less, and may more preferably be in a range of 10% to 14%. In a case in which the above range is satisfied, the conductive path may form a uniform network while the binder appropriately forms the three-dimensional fiber network structure, and electrical conductivity properties may be excellently exhibited while maintaining the mechanical strength of the electrode material mixture film above a certain level.

According to an embodiment of the present invention, when analyzing elemental contents within a pixel by SEM-EDS for a cross section of the electrode material mixture film, the electrode material mixture film may have an area ratio of pixel regions, in which 30 wt% or more of the carbon element is detected, of 1% to 30%, preferably 1% or more, 2% or more, 3% or more, 4% or more, 5% or more, 6% or more, 7% or more, 8% or more, 9% or more, or 10% or more, and 30% or less, 28% or less, 26% or less, 24% or less, 22% or less, 20% or less, 18% or less, 17% or less, 16% or less, 15% or less, or 14% or less, and more preferably 10% to 14%. In a case in which the above range is satisfied, a conductive network with a uniform conductive path may be achieved, and since the dispersibility of the conductive agent is excellent, the resistivity is low and the uniformity of the resistance may be excellent.

When analyzing the elemental contents within the pixel by the SEM-EDS for the cross section of the electrode material mixture film, the area ratio of the pixel regions in which 30 wt% or more of the carbon element is detected may be measured similarly to the above-described CFAR and FAR.

According to an embodiment of the present invention, the electrode material mixture film may have a tensile strength of 0.30 MPa to 0.70 MPa, preferably 0.30 MPa or more, 0.35 MPa or more, 0.36 MPa or more, 0.37 MPa or more, 0.38 MPa or more, 0.39 MPa or more, 0.40 MPa or more, or 0.41 MPa or more, and 0.70 MPa or less, 0.65 MPa or less, 0.60 MPa or less, 0.55 MPa or less, 0.50 MPa or less, 0.48 MPa or less, 0.47 MPa or less, or 0.46 MPa or less, and may preferably have a tensile strength of 0.41 MPa to 0.46 MPa. In a case in which the above range is satisfied, excellent processability may be achieved because contamination of a calendering roll does not occur while excellent processability may also be achieved because tearing or fracture of the electrode material mixture film does not occur during the preparation of the electrode material mixture film. Also, since an excessive amount of the binder is not included in the electrode material mixture film, resistance is low and there are fewer side reactions, and thus, lifetime may be excellent.

According to an embodiment of the present invention, the electrode material mixture film may have an elongation of 1.5% to 5.5%, preferably 1.5% or more, 1.6% or more, 1.7% or more, 1.8% or more, 1.9% or more, 2.0% or more, 2.1% or more, 2.2% or more, 2.3% or more, 2.4% or more, 2.5% or more, or 2.6% or more, and 5.5% or less, 5.4% or less, 5.3% or less, 5.2% or less, 5.1% or less, 5.0% or less, 4.9% or less, 4.8% or less, or 4.7% or less, and may more preferably have an elongation of 2.6% to 4.7%. In a case in which the above range is satisfied, it may be desirable that process uniformity may be secured while preventing the fracture of the electrode material mixture film, and resistivity is low while maintaining appropriate mechanical strength of the electrode material mixture film and resistance uniformity may be excellent.

According to an embodiment of the present invention, the electrode material mixture film may have an electrode layer resistivity of 500 $\Omega$cm or less, preferably 450 $\Omega$cm or less, 400 $\Omega$cm or less, 350 $\Omega$cm or less, 300 $\Omega$cm or less, 250 $\Omega$cm or less, 200 $\Omega$cm or less, 150 $\Omega$cm or less, 100 $\Omega$cm or less, or 50 $\Omega$cm or less, and 1 $\Omega$cm or more, 2 $\Omega$cm or more, 3 $\Omega$cm or more, or 4 $\Omega$cm or more, and may more preferably have an electrode layer resistivity of 4 $\Omega$cm to 50 $\Omega$cm. In a case in which the above range is satisfied, since conductivity of the electrode material mixture film is excellent, resistance characteristics of the battery may be excellent, and it may be desirable that the appropriate mechanical strength of the electrode material mixture film may be maintained.

In this case, the electrode layer resistivity may mean resistivity within the electrode material mixture film, and, for example, may mean a mean value obtained by measuring resistivity at an arbitrary point within the electrode material mixture film six times.

According to an embodiment of the present invention, the electrode material mixture film may have a ratio of a standard deviation of the electrode layer resistivity to a mean value of the electrode layer resistivity of the electrode material mixture film of 40% or less, preferably, 35% or less, 30% or less, 25% or less, 20% or less, 19% or less, 18% or less, 17% or less, or 16.5% or less. The ratio of the standard deviation of the electrode layer resistivity to the mean value of the electrode layer resistivity of the electrode material mixture film may be a parameter indicating the uniformity of the conductive network within the electrode. In a case in which the above range is satisfied, since the conductive network is uniformly formed within the electrode, it may be desirable that electrode durability and cell durability are improved.

In this case, the mean value and the standard deviation of the electrode layer resistivity may be values derived by measuring resistivity at an arbitrary point within the electrode material mixture film six or more times.

According to an embodiment of the present invention, the electrode material mixture film may have an interfacial resistivity of $9 \times 10^{-1}$ $\Omega$cm$^2$ or less, preferably $8 \times 10^{-1}$ $\Omega$cm$^2$ or less, $7 \times 10^{-1}$ $\Omega$cm$^2$ or less, $6 \times 10^{-1}$ $\Omega$cm$^2$ or less, $5 \times 10^{-1}$ $\Omega$cm$^2$ or less, $4 \times 10^{-1}$ $\Omega$cm$^2$ or less, $3 \times 10^{-1}$ $\Omega$cm$^2$ or less, $2 \times 10^{-1}$ $\Omega$cm$^2$ or less, $1 \times 10^{-1}$ $\Omega$cm$^2$ or less, $9 \times 10^{-2}$ $\Omega$cm$^2$ or less, $8 \times 10^{-2}$ $\Omega$cm$^2$ or less, $7 \times 10^{-2}$ $\Omega$cm$^2$ or less, or $6 \times 10^{-2}$ $\Omega$cm$^2$ or less, and $5 \times 10^{-3}$ $\Omega$cm$^2$ or more, $7 \times 10^{-3}$ $\Omega$cm$^2$ or more, $9 \times 10^{-3}$ $\Omega$cm$^2$ or more, $1 \times 10^{-2}$ $\Omega$cm$^2$ or more, $2 \times 10^{-2}$ $\Omega$cm$^2$ or more, $3 \times 10^{-2}$ $\Omega$cm$^2$ or more, or $3.5 \times 10^{-2}$ $\Omega$cm$^2$ or more. In a case in which the above range is satisfied, since resistance between the current collector and the electrode material mixture film is low, the resistance characteristics of the battery may be excellent, and it may be desirable that the appropriate mechanical strength of the electrode material mixture film may be maintained.

In this case, the interfacial resistivity may mean interfacial area resistivity between the current collector and the electrode material mixture film, and, for example, may mean a mean value obtained by measuring resistivity at an arbitrary point between the current collector and the electrode material mixture film six times.

According to an embodiment of the present invention, the electrode material mixture film may have a ratio of a standard deviation of the interfacial resistivity to a mean value of the interfacial resistivity of the electrode material mixture film of 25% or less, preferably 22% or less, 20% or less, 18% or less, or 16% or less, and more preferably 1% or more, 5% or more, or 7% or more, and may more preferably have a ratio of a standard deviation of the interfacial resistivity to a mean value of the interfacial resistivity of the electrode material mixture film of 7% to 16%. The ratio of the standard deviation of the interfacial resistivity to the mean value of the interfacial resistivity of the electrode material mixture film may be a parameter indicating the uniformity of the conductive network between the current collector and the electrode material mixture film. In a case in which the above range is satisfied, since the conductive network is uniformly formed between the current collector and the electrode material mixture film, it may be desirable that the electrode durability and the cell durability are improved.

In this case, the mean value and the standard deviation of the interfacial resistivity may be values derived by measuring interfacial resistivity at an arbitrary point between the current collector and the electrode material mixture films six or more times.

Hereinafter, components included in the electrode material mixture film will be described in detail.

1) Electrode Active Material

The electrode material mixture film includes an electrode active material.

There is no particular limitation on the electrode active material as long as it is a commonly used electrode active material, and, for example, the electrode active material may be a positive electrode active material or a negative electrode active material.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{Z1}O_4$ (where 0<Z1<2), etc.), lithium-nickel-manganese-cobalt-based oxide (e.g., $Li(Ni_pCo_qMn_r)O_2$ (where 0<p<1, 0<q<1, 0<r<1, and p+q+r=1) or $Li(Ni_{p1}Co_{q1}Mn_{r1})O_4$ (where 0<p1<2, 0<q1<2, 0<r1<2, and p1+q1+r1=2), etc.), lithium-nickel-cobalt-transition metal (M) oxide (e.g., $Li(Ni_{p2}Co_{q2}Mn_{r2}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein 0<p2<1, 0<q2<1, 0<r2<1, 0<S2<1, and p2+q2+r2+S2=1), etc.), or lithium iron phosphate (e.g., $Li_{1+a}Fe_{1-x}M_x(PO_{4-b})X_b$ (where M is at least one selected from Al, Mg, and Ti, and X is at least one selected from fluorine (F), sulfur (S), and nitrogen (N), wherein -0.5≤a≤0.5, 0≤x≤0.5, and 0≤b≤0.1), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}CO_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, etc.), lithium nickel cobalt aluminum oxide (e.g., $LiNi_{0.8}Co_{0.15}Al_{0.05}O_2$, etc.), lithium nickel manganese cobalt aluminum oxide (e.g., $Li(Ni_{0.86}Co_{0.05}Mn_{0.07}Al_{0.02})O_2$), or lithium iron phosphate (e.g., $LiFePO_4$), and any one thereof or a mixture of two or more thereof may be used. More specifically, in terms of being able to prepare an electrode material mixture film in a form of a uniform and stable film, the electrode active material may include lithium nickel cobalt manganese aluminum oxide.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), barium (Ba), radium (Ra), germanium (Ge), Al, and tin (Sn) or an alloy of lithium and the metal may be used.

One selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3$ (0≤x≤1), $Li_xWO_2$ (0≤x≤1), and $Sn_xMe_{1-x}Me'_yO_z$ (Me: manganese (Mn), Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, $SiO_x$ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), S, selenium (Se), tellurium (Te), polonium (Po), and a combination thereof.

The transition metal oxide may include lithium-containing titanium composite oxide (LTO), vanadium oxide, and lithium vanadium oxide.

According to an embodiment of the present invention, the electrode active material may be included in an amount of 80 parts by weight to 99 parts by weight, preferably, 90 parts by weight to 99 parts by weight based on a total weight of the electrode material mixture film. In a case in which the above range is satisfied, it is desirable in terms of energy density and increasing capacity of the electrode.

2) Conductive Agent

The electrode material mixture film includes a conductive agent.

According to an embodiment of the present invention, the conductive agent may include expandable carbon nanotubes. In a case in which the above conditions are satisfied, since the conductive agent maintains continuity of the conductive network and a reinforcing effect in terms of the mechanical strength of the electrode material mixture film through the interaction between the conductive agent and the binder having a three-dimensional fiber network structure while forming the conductive network in which the conductive agent is appropriately dispersed within the electrode material mixture film, it may be desirable that the electrode material mixture film may exhibit excellent mechanical strength and resistance characteristics.

A detailed description of the expandable carbon nanotubes will be provided later.

According to an embodiment of the present invention, the conductive agent may be included in an amount of 0.1 part by weight to 10 parts by weight, preferably, 0.1 part by weight to 5.0 parts by weight based on the total weight of the electrode material mixture film. In a case in which the above range is satisfied, it is desirable that excellent capacity density may be achieved while being able to form an excellent conductive path.

3) Binder

The electrode material mixture film includes a binder having a three-dimensional fiber network structure.

The binder has a function of forming a three-dimensional fiber network structure so that the electrode material mixture film may be free-standing, wherein the binder is not particularly specified as long as it is fibrillizable, that is, it may form a three-dimensional fiber network structure in the electrode material mixture film through fibrillization and may provide pores that may accommodate the electrode active material and optionally the conductive agent.

The fibrillization of the binder means a treatment of finely dividing a polymer that is used as the binder, wherein, for example, it may be performed by applying a mechanical shear force, and as a result, a plurality of fine fibers may be formed as a surface is loosened and fibrillized, and accordingly, the binder may include a three-dimensional fiber network structure.

The fibrillizable binder is not particularly specified as long as it may be fibrillized, and the fibrillization refers to a treatment of finely dividing a polymer. For example, the fibrillization may be performed using a mechanical shear force or the like, and surfaces of the polymer fibers thus fibrillized are loose to generate a large number of fine fibers (fibrils). The fibrillizable binder may preferably include at least one selected from the group consisting of polytetrafluoroethylene (PTFE) and polyolefin, may more preferably include polytetrafluoroethylene (PTFE), and may even more preferably be polytetrafluoroethylene (PTFE). In a case in which the above conditions are satisfied, resistance may be appropriately reduced while being able to achieve excellent dispersibility of the conductive agent.

According to an embodiment of the present invention, the polytetrafluoroethylene (PTFE) may be included in an amount of 60 wt% or more based on a total weight of the binder. In this case, the binder may additionally include at least one of PEO (polyethylene oxide), PVdF (polyvinylidene fluoride), PVdF-HFP (polyvinylidene fluoride-co-hexafluoropropylene), and a polyolefin-based binder.

According to an embodiment of the present invention, the fibrillizable binder may be included in an amount of 0.1 part by weight to 10 parts by weight, preferably, 0.1 part by weight to 5.0 parts by weight based on the total weight of the electrode material mixture film. In a case in which the above range is satisfied, it is desirable that resistance characteristics may be excellent while being able to achieve a degree of fibrillization suitable for preparing a free-standing sheet.

According to an embodiment of the present invention, the amount of the conductive agent in the electrode material mixture film may be higher than the amount of the binder in the electrode material mixture film. In a case in which the above range is satisfied, since an excellent conductive network is formed, the resistivity may be low and the uniformity of the resistance may be excellent.

The dry electrode according the present invention may be prepared by including: a step S1 of obtaining a material mixture composition by mixing an electrode active material, a conductive agent, and a fibrillizable binder; a step S2 of forming a mixed aggregate by kneading the material mixture composition while applying a shear force; a step S3 of grinding the mixed aggregate to prepare powder for an electrode; and a step S4 of sheet-forming an electrode material mixture film by roll-pressing the powder for an electrode.

(Step S1)

It is a step of forming a material mixture composition by mixing an electrode active material, a conductive agent, and a fibrillizable binder. Since the electrode active material, the conductive agent, and the fibrillizable binder have been described in detail above, a description thereof will be omitted, and, in this case, the mixing is performed such that the electrode active material, the conductive agent, and the fibrillizable binder may be uniformly distributed, wherein, since they are mixed in a powder form, they may be mixed by various methods without limitation as long as they may be simply mixed. However, since the electrode in the present invention is prepared as a dry electrode that does not use a solvent, the mixing may be performed as dry mixing and may be performed by adding the above materials to a device such as a mixer or a blender.

In this case, the mixing may be performed in a mixer at 100 rpm to 5,000 rpm for 1 minute to 60 minutes, and may preferably be performed at 500 rpm to 4,000 rpm for 3 minutes to 45 minutes, and may more preferably be performed at 100 rpm to 3,000 rpm for 5 minutes to 30 minutes. In a case in which the mixing is performed within the above range, since the materials may be uniformly mixed, battery performance may be improved.

Control conditions of the mixing process may determine how uniformly the binder is fibrillized in the subsequent kneading process of step S2, and since a non-uniform portion may occur within the entire film even if fibrillization occurs uniformly when the mixing is not uniform, it may be desirable to perform the mixing process under the conditions as described above.

(Step S2)

Next, for the material mixture composition obtained in the mixing, a mixed aggregate may be prepared by performing a fibrillization process of the binder using the binder capable of forming a three-dimensional fiber network structure. Preferably, a step of forming a mixed aggregate may be performed by kneading the material mixture composition while applying a shear force thereto.

The fibrillization process, for example, may be performed through mechanical milling or kneading, and is not particularly limited as long as it is generally performed, but preferably, it may be performed by high-temperature, low-shear kneading, and may be performed, for example, using a kneading machine such as a kneader. Since the binder capable of forming a three-dimensional fiber network structure bonds and connects electrode active material and conductive agent powders while being fibrillized by the kneading, a mixed aggregate with a solid content of 100% may be formed.

The kneading may be performed at a speed of 10 rpm to 100 rpm, and may specifically be performed at a speed of 20 rpm to 70 rpm. Also, the kneading may be performed for 1 minute to 120 minutes, and may specifically be performed for 2 minutes to 60 minutes. In a case in which the above range is satisfied, appropriate fibrillization may occur, and a structurally stable three-dimensional fiber network structure may be formed while being uniformly fibrillized throughout.

Furthermore, the kneading may be performed at high temperatures and at a pressure above atmospheric pressure, and may specifically be performed at a pressure above atmospheric pressure.

More specifically, the kneading may be performed at a temperature of 50°C to 230°C, preferably, 90°C to 200°C. In a case in which the kneading is performed at a high temperature within the above range, the fibrillization of the binder and the aggregation due to the kneading may be well achieved, and a problem of disconnection of the fibrillized binder may be appropriately prevented.

Also, the kneading may be performed at a pressure above atmospheric pressure, specifically, at a pressure of 1 atm to 3 atm. When it is performed within the above range, the problem of the disconnection of the fibrillized binder may be appropriately prevented and a problem of excessive increase in density of the aggregate may be prevented.

That is, according to the present invention, when a high-temperature, low-shear mixing process is performed at high temperatures and at a pressure above atmospheric pressure instead of high-shear mixing, an effect intended by the present invention may be achieved.

(Step S3)

Next, a step of obtaining powder for an electrode by grinding the mixed aggregate prepared through the kneading step may be performed. Preferably, a step of grinding the mixed aggregate to prepare powder for an electrode may be performed.

The mixed aggregate prepared through the kneading may also be directly pressed to form a sheet (sheeting, for example, calendering process), but, in this case, the mixed aggregate must be prepared in a form of a thin film by pressing it at high pressure and high temperature, and accordingly, a problem may occur in which density of the film may be excessively increased or a uniform film may not be obtained. Thus, the mixed aggregate prepared as described above is ground to prepare powder for an electrode.

A device used for the grinding is not particularly limited, but the grinding may preferably be performed using a device such as a blender or grinder.

The grinding may be performed at a speed of 1,000 rpm to 15,000 rpm for 1 minute to 30 minutes, preferably, at a speed of 3,000 rpm to 10,000 rpm for 5 minutes to 20 minutes. In a case in which the grinding is performed within the above range, sufficient grinding may be achieved to prepare powder of an appropriate size for film formation, and a large amount of fine powder may not be generated in the mixed aggregate.

An average particle diameter of the powder for an electrode may be in a range of 10 $\mu$m to 3,000 $\mu$m, specifically 50 $\mu$m to 1,500 um, and more specifically 100 $\mu$m to 700 $\mu$m. In a case in which the above range is satisfied, an electrode material mixture film having uniform thickness and density may be formed, and excellent physical properties of the electrode material mixture film may be secured.

Although it is not essential, the powder for an electrode may additionally include fillers to suppress expansion of the electrode. The filler is not particularly limited as long as it is a fibrous material that does not cause chemical changes in the battery, but, for example, the filler may include at least one selected from olefin-based polymers such as polyethylene and polypropylene; and fibrous materials such as glass fibers and carbon fibers.

(Step S4)

Next, the powder for an electrode is roll-pressed to form an electrode material mixture film in a form of a sheet. Preferably, it may be a process for preparing an electrode material mixture film in the form of a free-standing sheet by hot-pressing the powder for an electrode using calender rolls in a roll-to-roll process including two or more pairs of the calender rolls.

The roll-to-roll process may include a roll press unit in which roll pressing is performed, wherein the roll press unit may include a pair of calender rolls arranged to face each other, a plurality of calender rolls may be arranged continuously, and the plurality of calender rolls may be arranged continuously in the roll press unit. In a case in which the plurality of calender rolls are arranged continuously, temperature of each calender roll and a nip speed ratio (rotational speed ratio of the pair of calender rolls) may be the same or different.

According to an embodiment of the present invention, temperature of the calender roll may be in a range of 50°C to 200°C, the temperature of the calender roll may preferably be in a range of 50°C to 180°C, and the temperature of the calender roll may more preferably be in a range of 60°C to 150°C. In a case in which the above range is satisfied, an electrode material mixture film having excellent processability and uniformity may be obtained.

A rotational speed ratio of the calender rolls provided in the roll-to-roll process of the step S4 may be appropriately adjusted independently within a range of 1:1 to 1:10. Also, in order to adjust the prepared electrode material mixture film to have an appropriate thickness, the above-prepared electrode material mixture film may be introduced into the roll press unit again and hot-pressed 1 to 10 times.

According to an embodiment of the present invention, the step S4 may include a step (S4a) of obtaining a powder-sheeting film by pre-sheeting the powder for an electrode; and a step (S4b) of preparing an electrode material mixture film by sheeting the powder-sheeting film two or more times. That is, after converting the powder into the form of a sheet in step S4a, the sheet may be rolled to improve strength and satisfy porosity and loading amount, which are required in the electrode, through step S4b.

According to an embodiment of the present invention, a step of laminating the electrode material mixture film on one side or both sides of the current collector and introducing it into a lamination unit may be further included. Accordingly, since the electrode material mixture film may be rolled onto the current collector, a dry electrode, in which the electrode material mixture film is disposed on the current collector, may be prepared.

The lamination may be one in which the electrode material mixture film is attached onto the current collector by rolling. The lamination may be performed by a roll press method using the lamination unit including a lamination roll.

According to an embodiment of the present invention, the lamination roll may be maintained at a temperature of 20°C to 200°C.

It may be desirable that the lamination may be performed after one or more, or two or more hot-pressings, and thereafter, one or more additional hot-pressings may be performed to achieve the desired porosity. In a case in which the lamination is performed in the middle of calendering as described above, an appearance of the electrode or processability of the calendering may be excellent in comparison to a case in which porosity is reduced in a state of the material mixture film before lamination. Control of the porosity through the additional hot-pressing may be achieved by controlling a compression ratio by adjusting a roll gap, and the compression ratio may be derived by Equation 2 below.

Compression ratio (%) = [(electrode thickness) - (roll gap)]/[(electrode thickness) - (current collector thickness)]     [Equation 2]

(Current Collector)

In a case in which the dry electrode is a positive electrode, the current collector is not particularly limited so long as it has conductivity without causing chemical changes in the battery. For example, stainless steel, aluminum, nickel, titanium, fired carbon, or aluminum or stainless steel that is surface-treated with one of carbon, nickel, titanium, silver, or the like may be used as the current collector.

A thickness of the current collector may be in a range of 8 $\mu$m to 500 $\mu$m, and is not limited thereto. Also, the current collector may have fine surface roughness to improve the adhesion with the electrode material mixture film.

In a case in which the dry electrode is a negative electrode, the current collector is not particularly limited so long as it has high conductivity without causing changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

The current collector may typically have a thickness of 3 $\mu$m to 500 $\mu$m, and, as in the case that the dry electrode is used as the positive electrode, the current collector may have fine surface roughness to improve the adhesion with the electrode material mixture film.

The current collector, which is coated entirely or partially with a conductive primer for reducing resistance and improving adhesion on a surface thereof, may be used. Herein, the conductive primer may include a conductive material and a binder, wherein the conductive material is not limited as long as it is a material having conductivity, but, for example, may be a carbon-based material. The binder may include a fluorine-based binder (including PVDF and PVDF copolymer), an acrylic-based binder, and a water-based binder which may be dissolved in a solvent.

Hereinafter, the expandable carbon nanotubes will be described in detail.

**Expandable Carbon Nanotubes**

According to an embodiment of the present invention, the conductive agent may include expandable carbon nanotubes.

Unlike the wet electrode that undergoes a process of dispersing and/or mixing in a solvent, the conductive agent (e.g., carbon nanotubes) is dispersed and/or mixed in a solvent-free state during the preparation of the dry electrode. In a case in which the process of dispersing and/or mixing is performed in a solvent-free state, since buffering and dispersing effects by the solvent may not be achieved, there is a problem in that excessive cutting of the conductive agent occurs due to an excessive shear force or it is difficult to achieve a desired degree of expansion. Particularly, in a case in which a dry electrode is prepared by using a conductive agent that is subjected to excessive cutting or is not properly dispersed, since a contact area with the electrode active material is reduced while formation of a conductive path within the electrode is limited, this may result in a disadvantage that degrades cell performance.

The expandable carbon nanotubes are different from densely packed carbon nanotubes or high-density carbon nanotube aggregates generally used in large-scale industries, wherein they may be characterized by forming a kind of pop-type having an expanded structure without excessive cutting of the carbon nanotubes. Preferably, unlike carbon nanotubes dispersed using an aqueous dispersion, they may be characterized by forming a pop-type having an expanded structure without excessive cutting of carbon nanotubes in a dry, solvent-free state.

The pop-type may refer to a form in which densely packed carbon nanotube aggregates are disassembled and visually loosely separated to increase a space between carbon nanotubes and an overall volume is increased as connection between the carbon nanotubes becomes loose. For example, since a kind of honeycomb structure with reduced density between the carbon nanotubes may be formed due to the expanded structure, surfaces of more carbon nanotubes may be exposed to the outside.

Thus, in a case in which the conductive agent includes expandable carbon nanotubes, it may be desirable that it may achieve excellent mechanical strength and resistance characteristics by maintaining continuity of a conductive network while forming the well-dispersed conductive network. For example, with respect to the expandable carbon nanotubes having an expanded structure with minimal cutting while being appropriately dispersed, since excellent dispersibility may be maintained while minimizing cutting during the subsequent dry electrode preparation process, an excellent conductive network between the electrode active materials in the electrode material mixture film and/or within the electrode active material is formed and aggregation of the conductive agent that reduces a conductive effect is sufficiently prevented, and thus, excellent resistance characteristics and life characteristics may be achieved.

In this case, the expandable carbon nanotubes having a pop-type may be achieved by various methods, but may preferably be achieved by controlling characteristics, such as a shape, a diameter, a length and/or the number of walls, of the carbon nanotubes, or conditions for disintegrating the carbon nanotubes.

According to an embodiment of the present invention, when electrical conductivity (S/cm) and packing density (g/cc) of the expandable carbon nanotube are plotted on the y-axis and the x-axis, respectively, a slope may be 90 or more, the slope may preferably be 91 or more, 92 or more, 93 or more, 94 or more, 95 or more, 96 or more, 97 or more, or 98 or more, and may be 150 or less, 145 or less, 140 or less, 135 or less, 130 or less, 129 or less, 128 or less, 127 or less, 126 or less, or 125 or less, and the slope may more preferably be in a range of 98 to 125. In a case in which the above range is satisfied, since expandable carbon nanotubes having an expanded structure are formed while minimizing the occurrence of cutting, excellent resistance characteristics and life characteristics may be achieved when subsequently used as the conductive agent. Particularly, since the slope is measured in a powder state of the expandable carbon nanotubes, it is a parameter that is very difficult to measure in a pre-dispersion of a conductive agent prepared under general wet conditions.

With respect to the expandable carbon nanotubes according to the present invention, the electrical conductivity (S/cm) and the packing density (g/cc) may be measured while applying a pressure of 50 MPa to 420 MPa to the expandable carbon nanotubes. Preferably, the electrical conductivity (S/cm) and the packing density (g/cc) may be measured while applying a pressure of 60 MPa to 420 MPa, and more preferably, may be measured while applying a pressure of 70 MPa to 420 MPa. Since the expandable carbon nanotubes may have low bulk density while forming an expanded structure, a sufficient electrical contact between the expandable carbon nanotubes may not be achieved when a low pressure is applied, and thus, it may be difficult to clearly measure conductive properties inherent in the expandable carbon nanotubes. That is, it may be difficult to measure the slope intended by the present invention when the low pressure is applied. Also, since the conductivity of the expandable carbon nanotubes is measured in a high pressure range applied when actually preparing the electrode, it is characterized in that conductivity in an electrode state may be more clearly determined. Thus, in a case in which the electrical conductivity and the packing density are measured by applying a pressure in the above range, since the electrical conductivity and the packing density may be measured in a state in which a sufficient electrical contact is achieved between the expandable carbon nanotubes, a slope, which may clearly represent the conductive properties inherent in the expandable carbon nanotubes, may be measured.

According to an embodiment of the present invention, bulk density of the expandable carbon nanotubes may be 0.022 g/cc or less, may preferably be 0.020 g/cc or less, 0.018 g/cc or less, 0.016 g/cc or less, 0.014 g/cc or less, 0.012 g/cc or less, 0.010 g/cc or less, or 0.009 g/cc or less, may be 0.001 g/cc or more or 0.002 g/cc or more, and may more preferably be in a range of 0.001 g/cc to 0.009 g/cc. In a case in which the above range is satisfied, since excessive cutting may not occur while being able to form an appropriately expanded structure, excellent resistance characteristics and life characteristics may be achieved.

According to an embodiment of the present invention, when the packing density of the expandable carbon nanotubes is 1.0 g/cc, the electrical conductivity may be 70 S/cm or more, may preferably be 70 S/cm or more, 71 S/cm or more, 72 S/cm or more, 73 S/cm or more, 74 S/cm or more, or 75 S/cm or more, and may be 125 S/cm or less, 123 S/cm or less, 120 S/cm or less, 117 S/cm or less, or 115 S/cm or less. The electrical conductivity may more preferably be in a range of 75 S/cm to 115 S/cm. In a case in which the above range is satisfied, it may be desirable that the expandable carbon nanotubes may form an excellent expanded structure by having an appropriate expanded form.

According to an embodiment of the present invention, a ratio (TD/BD) of true density (TD) to bulk density (BD) of the expandable carbon nanotubes may be in a range of 91 to 673, may preferably be in a range of 134 to 505, and may more preferably be in a range of 200 to 405. In a case in which the above range is satisfied, it may be desirable that the expandable carbon nanotubes may be expanded appropriately and may simultaneously achieve excellent dispersibility.

The bulk density (BD) may be measured by a method of filling the expandable carbon nanotubes into a container of a specific volume with a known weight, measuring its weight, and then converting the weight to density.

The true density (TD) differs from the bulk density in that it is density of a volume of material itself excluding pores within a porous material. A device for measuring the true density (TD), for example, may include a dry automatic density meter (AccuPyc II 1340 series, Shimadzu Corporation). When using the above device, the true density may be automatically measured by introducing a small amount of the expandable carbon nanotubes. The true density may also be obtained using other measurement methods and/or devices in addition to the above-described measurement method and/or device.

According to an embodiment of the present invention, the true density (TD) of the expandable carbon nanotubes may be in a range of 1.850 g/cc to 2.500 g/cc, may preferably be in a range of 1.900 g/cc to 2.300 g/cc, and may more preferably be in a range of 1.950 g/cc to 2.150 g/cc. In a case in which the above range is satisfied, it may be desirable that the true density may be density that may form sufficient conductive paths within the electrode and the expanded structure may be easily formed.

According to an embodiment of the present invention, a Brunauer-Emmett-Teller (BET) specific surface area of the expandable carbon nanotubes may be in a range of 200 $m^2$/g to 1,000 $m^2$/g, may preferably be in a range of 250 $m^2$/g to 950 $m^2$/g, and may more preferably be in a range of 300 $m^2$/g to 900 $m^2$/g. In a case in which the above range is satisfied, it may be desirable that excellent dispersibility may be achieved while an appropriately expanded structure may be formed.

According to an embodiment of the present invention, the expandable carbon nanotube powder may include a carbon nanotube unit. A graphite sheet of the carbon nanotube has a cylindrical shape with a nano-sized diameter and has an $sp^2$ bond structure. In this case, the carbon nanotube may exhibit characteristics of a conductor or semiconductor depending on a structure and an angle at which the graphite sheet is rolled. The carbon nanotube may be classified into a single-walled carbon nanotube (SWCNT) unit, a double-walled carbon nanotube (DWCNT) unit, and a multi-walled carbon nanotube (MWCNT) unit depending on the number of bonds forming the wall.

According to an embodiment of the present invention, the carbon nanotube unit may be a multi-walled carbon nanotube unit. In a case in which the carbon nanotube unit is a single-walled carbon nanotube or a double-walled carbon nanotube, processability may be reduced due to excessively high battery preparation costs, and it may be difficult to form expandable carbon nanotubes having an expanded structure because the carbon nanotube units may exist in an excessively aggregated state. In contrast, in a case in which the carbon nanotube unit is a multi-walled carbon nanotube unit, since a manufacturing price is relatively low and cohesion between the carbon nanotube units is not excessive, formation of an appropriate expanded structure may be possible.

According to an embodiment of the present invention, an aspect ratio of the multi-walled carbon nanotube unit may be in a range of 30 to 10,000, preferably 60 to 2,000, and more preferably 100 to 1,000. In a case in which the above range is satisfied, dispersibility of the multi-walled carbon nanotube units may be excellent, and a contact area between the electrode active materials may be increased when subsequently used as the conductive agent. The aspect ratio may be defined as a ratio of a length to a diameter of the multi-walled carbon nanotube unit.

According to an embodiment of the present invention, an average length of the multi-walled carbon nanotube units may be in a range of 0.1 $\mu$m to 100 $\mu$m, preferably 0.1 $\mu$m to 50 $\mu$m, and more preferably 0.1 $\mu$m to 3 $\mu$m. In a case in which the above range is satisfied, appropriate dispersion of the multi-walled carbon nanotube units may be possible, and formation of a conductive network may be maximized when subsequently used as the conductive agent. The average length corresponds to an average value of lengths of top 100 multi-walled carbon nanotube units having a large length and bottom 100 multi-walled carbon nanotube units which are observed by a scanning electron microscope (SEM) or a transmission electron microscope (TEM).

According to an embodiment of the present invention, an average diameter of the multi-walled carbon nanotube units may be in a range of 5 nm to 200 nm, may preferably be 5 nm or more, 6 nm or more, 7 nm or more, 8 nm or more, 9 nm or more, or 10 nm or more, and 200 nm or less, 180 nm or less, 160 nm or less, 140 nm or less, 120 nm or less, 100 nm or less, 80 nm or less, 60 nm or less, or 50 nm or less, and may more preferably be in a range of 10 nm to 50 nm. In a case in which the above range is satisfied, since dispersion is easy, the conductivity may be improved when subsequentlyu sed as the conductive agent. The average diameter corresponds to an average value of diameters of top 100 multi-walled carbon nanotube units having a large diameter and bottom 100 multi-walled carbon nanotube units which are observed by an SEM or a TEM.

According to an embodiment of the present invention, a BET specific surface area of the multi-walled carbon nanotube unit may be in a range of 50 m$^2$/g to 500 m$^2$/g, may preferably be in a range of 100 m$^2$/g to 400 m$^2$/g, and may more preferably be in a range of 150 m$^2$/g to 350 m$^2$/g. In a case in which the above specific surface area rangeis satisfied, since appropriate dispersion between the multi-walled carbon nanotube units is possible, processability may be maintained. The BET specific surface area may be measured through a nitrogen adsorption BET method.

According to an embodiment of the present invention, the multi-walled carbon nanotube unit may have three or more graphene layers arranged in parallel with respect to an axis of the multi-walled carbon nanotube unit. Preferably, the multi-walled carbon nanotube unit may have 3 to 20 graphene layers, more preferably, may have 3 to 10 graphene layers, and even more preferably, may have 3 to 5 graphene layers. In a case in which the above range is satisfied, since the multi-walled carbon nanotube units are appropriately dispersed, it may be desirable that the conductivity of the expandable carbon nanotube powder may be improved while the expandable carbon nanotube powder having an expanded structure may be prepared.

Hereinafter, a method of preparing the expandable carbon nanotubes will be described.

## Method of Preparing the Expandable Carbon Nanotubes

According to an embodiment of the present invention, a method of preparing the expandable carbon nanotube powder includes a step of disintegrating carbon nanotube aggregates by colliding the carbon nanotube aggregates with each other in a solvent-free state in a disintegration device, wherein the disintegrating is performed by rotation of two or more rotors provided in the disintegration device and high-pressure gas injected from an injection nozzle provided in the disintegration device, a rotational speed of the rotor is 3,000 rpm or more, and the injection nozzle injects the high-pressure gas at a pressure of 3.5 bar or more.

Unlike the wet electrode that undergoes a process of dispersing and/or mixing in a solvent, the conductive agent (e.g., carbon nanotubes) is dispersed and/or mixed in a solvent-free state during the preparation of the dry electrode. In a case in which the process of dispersing and/or mixing is performed in a solvent-free state, since buffering and dispersing effects by the solvent may not be achieved, there is a problem in that excessive cutting of the conductive agent occurs due to an excessive shear force or it is difficult to achieve a desired degree of expansion. Particularly, in a case in which the carbon nanotubes are disintegrated in a solvent-free state, since aggregation between the carbon nanotubes due to van der Waals forces occurs, disintegration is more difficult. Also, since the carbon nanotubes have a linear shape, there is a problem in that excessive grinding of the carbon nanotubes occurs due to an excessive shear force when dispersion and/or mixing is performed in a solvent-free state.

Accordingly, the present invention aims to provide a method of preparing expandable carbon nanotube powder having excellent dispersibility by disintegrating carbon nanotube aggregates by colliding the carbon nanotube aggregates with each other in a solvent-free state, but controlling disintegration conditions to satisfy specific conditions to form an expanded structure without excessive cutting.

Specifically, a device, such as a jaw crusher and a hammer crusher, which may apply a grinding force with a strong shear force in a solvent-free state, has a problem that it is difficult to produce carbon nanotubes having an expanded structure because it causes excessive grinding that causes damage to the carbon nanotubes. However, in the present invention, since carbon nanotubes having an expanded structure may be prepared by disintegrating the carbon nanotubes with an appropriate force while minimizing cutting by colliding the carbon nanotubes with each other in a solvent-free state, excellent resistance characteristics and life characteristics may be achieved when subsequently preparing powder for an electrode and a dry electrode including the same.

Since the expandable carbon nanotubes have been described above, a detailed description of the expandable carbon nanotube powder will be omitted.

According to an embodiment of the present invention, a method of preparing the expandable carbon nanotube includes a step of disintegrating carbon nanotube aggregates by colliding the carbon nanotube aggregates with each other in a solvent-free state in a disintegration device, wherein the disintegrating is performed by rotation of two or more rotors provided in the disintegration device and high-pressure gas injected from an injection nozzle provided in the disintegration device. Preferably, the disintegrating may be performed by a swirling airflow generated by the rotation of the two or more rotors provided in the disintegration device and the high-pressure gas injected from the injection nozzle provided in the disintegration device, and more preferably, the disintegrating may be performed by impact force and the swirling airflow generated by the rotation of the two or more rotors provided in the disintegration device and the high-pressure gas injected from the injection nozzle provided in the disintegration device.

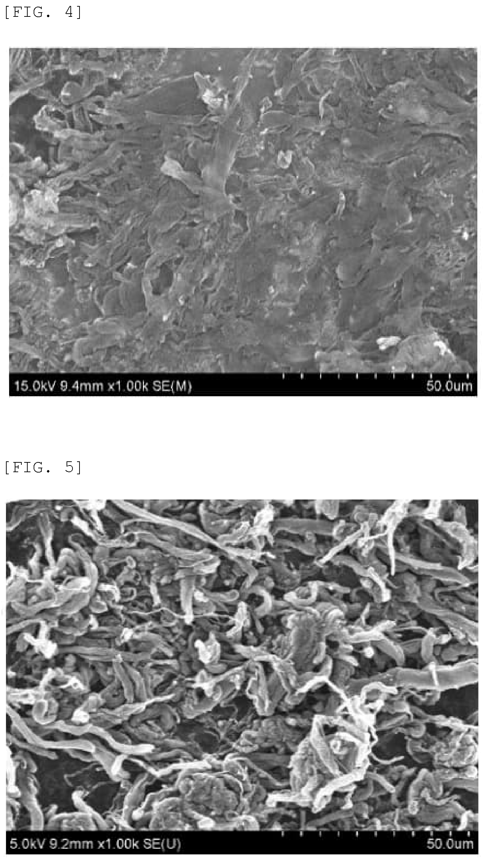

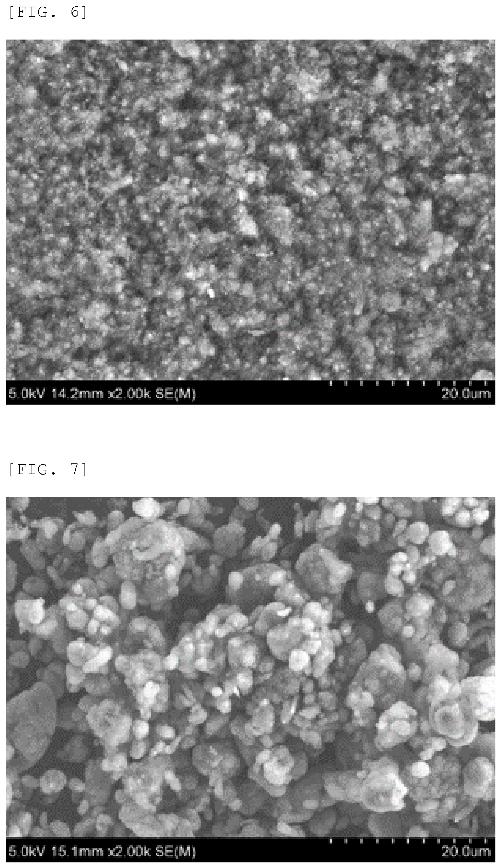

The preparation method is characterized by disintegrating the carbon nanotube aggregates by colliding them with each other, unlike a grinding method that applies excessive direct impact, such as ball milling. Accordingly, densely packed carbon nanotubes of FIGS. 4 and 6 may be formed into expandable carbon nanotubes having an expanded structure as shown in FIGS. 5 and 7 by preventing excessive cutting and aggregation of the carbon nanotube aggregates. In a case in which the expandable carbon nanotubes having an expanded structure are formed as described above, since the carbon nanotubes may form an excellent conductive network while appropriately connecting electrode active material particles and may exhibit excellent dispersibility even in a solvent-free state during the subsequent preparation of the powder for an electrode and/or the dry electrode, excellent resistance characteristics and life characteristics may be achieved.

In a case in which the above conditions are satisfied, it may be desirable that a degree of disintegration may be increased by enhancing the collision between the carbon nanotube aggregates due to the swirling airflow and the high-pressure gas, and it may be desirable that the degree of disintegration may be increased by causing the carbon nanotube aggregates to collide with the rotor due to the impact force by the rotor and/or pressure injected from the injection nozzle.

According to an embodiment of the present invention, the carbon nanotube aggregate may be an aggregate in which carbon nanotubes are densely packed, and, for example, may be bundle-type carbon nanotubes or entangled-type carbon nanotubes.

According to an embodiment of the present invention, the rotational speed of the rotor is 3000 rpm or more. Preferably, the rotational speed of the rotor may be 3100 rpm or more, 3200 rpm or more, 3300 rpm or more, 3400 rpm or more, 3500 rpm or more, 3600 rpm or more, 3700 rpm or more, 3800 rpm or more, 3900 rpm or more, 4000 rpm or more, 4100 rpm or more, 4200 rpm or more, 4300 rpm or more, 4400 rpm or more, 4500 rpm or more, 4600 rpm or more, 4700 rpm or more, 4800 rpm or more, 4900 rpm or more, or 5000 rpm or more, and 7000 rpm or less, 6900 rpm or less, 6800 rpm or less, 6700 rpm or less, 6600 rpm or less, 6500 rpm or less, 6400 rpm or less, 6300 rpm or less, 6200 rpm or less, 6100 rpm or less, 5900 rpm or less, 5800 rpm or less, 5700 rpm or less, 5600 rpm or less, 5500 rpm or less, or 5400 rpm or less, and may more preferably be in a range of 5000 rpm to 5400 rpm. In a case in which the rotational speed of the rotor is less than 3000 rpm, since the van der Waals force of the carbon nanotube aggregates may not be overcome, there is a problem in that expandable carbon nanotube powder having an expanded structure may not be prepared due to the aggregation of the carbon nanotube aggregates. Thus, in a case in which the above range is satisfied, since the cutting of the carbon nanotube aggregates may be minimized and expandable carbon nanotube powder having an expanded structure, which has been sufficiently disintegrated, may be prepared, excellent resistance characteristics and life characteristics may be achieved.

With respect to the method of preparing expandable carbon nanotube powder according to the present invention, the injection nozzle injects high-pressure gas at a pressure of 3.5 bar or more. Preferably, the injection nozzle may inject high-pressure gas at a pressure of 3.6 bar or more, 3.7 bar or more, 3.8 bar or more, 3.9 bar or more, 4.0 bar or more, 4.1 bar or more, 4.2 bar or more, 4.3 bar or more, 4.4 bar or more, 4.5 bar or more, 4.6 bar or more, 4.7 bar or more, 4.8 bar or more, 4.9 bar or more, or 5.0 bar or more, and may inject high-pressure gas at a pressure of 7.5 bar or less. More preferably, the injection nozzle may inject high-pressure gas at a pressure of 5.0 bar to 7.5 bar. The injection nozzle is a nozzle that injects a gas and/or fluid capable of generating pressure, such as water vapor, air, steam, nitrogen, and/or argon gas, wherein it may disintegrate the carbon nanotube aggregates through the collision between the carbon nanotube aggregates or the collision between the carbon nanotube aggregates and the rotor. In a case in which the injection nozzle injects high-pressure gas at a pressure of less than 3.5 bar, it is difficult to form expandable carbon nanotubes having an expanded structure because it may not be possible to apply enough pressure for the carbon nanotube aggregates to overcome the van der Waals force. Thus, in a case in which the above range is satisfied, since the cutting of the carbon nanotube aggregates may not occur and expandable carbon nanotube powder having an expanded structure, which has been sufficiently disintegrated, may be prepared, excellent resistance characteristics and life characteristics may be achieved.

According to an embodiment of the present invention, the disintegration device is not particularly limited as long as it is a disintegration device that may apply a non-excessive force, but, for example, may bea Galaxy jet mill (JEM).

Hereinafter, the carbon nanotube aggregate used in the preparation method according to the present invention will be described in more detail.

Among the carbon nanotube aggregates, the bundle-type carbon nanotubes refer to a form in which carbon nanotubes are aggregated into a bundle due to interactions between carbon nanotube units, rather than a form in which carbon nanotubes exist as single-stranded units, and may preferably refer to a form in which carbon nanotube units are attached to each other or intertwined due to interactions between each other.

According to an embodiment of the present invention, bulk density of the carbon nanotube aggregate may be in a range of 0.011 $g/cm^3$ to 0.900 $g/cm^3$, the bulk density of the carbon nanotube aggregate may preferably be in a range of 0.020 $g/cm^3$ to 0.500 $g/cm^3$, and the bulk density of the carbon nanotube aggregate may more preferably be in a range of 0.030 $g/cm^3$ to 0.150 $g/cm^3$. In a case in which the above range is satisfied, the carbon nanotube aggregate may be a carbon nanotube aggregate suitable for achieving the degree of disintegration according to the preparation method of the present invention.

The bulk density may be measured by a method of filling the expandable carbon nanotube powder into a container of a specific volume with a known weight, measuring its weight, and then converting the weight to density.

According to an embodiment of the present invention, a volume cumulative average particle diameter of the carbon nanotube aggregates may be in a range of 100 $\mu$m to 600 $\mu$m, may preferably be in a range of 200 $\mu$m to 580 $\mu$m, and may more preferably be in a range of 300 $\mu$m to 560 $\mu$m. In a case in which the above range is satisfied, since the appropriate number of carbon nanotube units is aggregated, the carbon nanotube aggregate may be a carbon nanotube aggregate suitable for achieving the degree of disintegration according to the preparation method of the present invention. The volume cumulative average particle diameter is not limited as long as it is measured by a conventional method, for example, it is measured by using a scanning electron microscope or a laser diffraction method, but may preferably be measured through a volume cumulative particle diameter distribution using a laser diffraction method.

The carbon nanotube aggregate may include a carbon nanotube unit. A graphite sheet of the carbon nanotube has a cylindrical shape with a nano-sized diameter and has an $sp^2$ bond structure. In this case, the carbon nanotube may exhibit characteristics of a conductor or semiconductor depending on a structure and an angle at which the graphite sheet is rolled. The carbon nanotube may be classified into a single-walled carbon nanotube (SWCNT) unit, a double-walled carbon nanotube (DWCNT) unit, and a multi-walled carbon nanotube (MWCNT) unit depending on the number of bonds forming the wall.

According to an embodiment of the present invention, the carbon nanotube aggregate may include a multi-walled carbon nanotube unit. In a case in which the carbon nanotube unit is a single-walled carbon nanotube or a double-walled carbon nanotube, processability may be reduced due to excessively high battery preparation costs, and disintegration may be difficult because the carbon nanotube units may exist in an excessively aggregated state. In contrast, in a case in which the carbon nanotube unit is a multi-walled carbon nanotube unit, since a manufacturing price is relatively low and cohesion between the carbon nanotube units is not excessive, appropriate disintegration may be possible, and thus, processability may be excellent.

Particularly, with respect to the multi-walled carbon nanotube unit, structural defects are high due to a mechanism of node growth (not a smooth linear shape, but nodes are present due to defects generated during a growth process). Thus, during the disintegration process, the multi-walled carbon nanotube units may be more easily cut, and the shortcut multi-walled carbon nanotube units are likely to be aggregated with each other via $\pi$-$\pi$ stacking due to a carbon surface bonding structure ($sp^2$) of the unit. However, in a case in which disintegration is performed through the preparation method according to the present invention, the effect of the present invention may be maximized in that the multi-walled carbon nanotube units may not be aggregated and degradation of the electrical conductivity due to a decrease in length of the carbon nanotube unit caused by excessive cutting may be prevented.

In a case in which the carbon nanotube aggregate includes a multi-walled carbon nanotube unit, the same applies to the multi-walled carbon nanotube unit as described above.

## Lithium Secondary Battery

Hereinafter, a lithium secondary battery according to the present invention will be described.

The lithium secondary battery according to the present invention may include the dry electrode according to the present invention. For example, the lithium secondary battery may include a secondary battery including a liquid electrolyte and an all-solid-state battery including a solid electrolyte.

Specifically, the lithium secondary battery according to the present invention includes a positive electrode, a negative electrode, a separator, and an electrolyte, wherein the positive electrode and/or the negative electrode may be a dry electrode, and specifically, the lithium secondary battery according to the present invention may be a lithium secondary battery including the dry electrode according to the present invention, a negative electrode, a separator, and an electrolyte. In a case in which only one of the positive electrode or the negative electrode is the dry electrode according to the present invention, the other electrode may be an electrode that is prepared through a conventional wet preparation method.

In a case in which a lithium secondary battery according to an embodiment of the present invention is a secondary battery including a liquid electrolyte, a separator may be included between a plurality of electrodes. The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, in a case in which the lithium secondary battery is an all-solid-state battery, the solid electrolyte membrane may be prepared to perform a function of the separator.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$,

LiClO$_4$, LiAsF$_6$, LiBF$_4$, LiSbF$_6$, LiAlO$_4$, LiAlCl$_4$, LiCF$_3$SO$_3$, LiC$_4$F$_9$SO$_3$, LiN(C$_2$F$_5$SO$_3$)$_2$, LiN(C$_2$F$_5$SO$_2$)$_2$, LiN(CF$_3$SO$_2$)$_2$, LiCl, LiI, or LiB(C$_2$O$_4$)$_2$ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

Also, since the lithium secondary battery according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Examples and Comparative Examples

### Example 1: Preparation of Dry Electrode

488 g of lithium nickel cobalt manganese oxide (LNF Co., Ltd.) as a positive electrode active material, 7 g of expandable carbon nanotubes as a conductive gent, and 5 g of polytetrafluoroethylene (PTFE), as a fibrillizable binder, were introduced into a blender and mixed at 1,500 rpm for 4 minutes to prepare a material mixture composition.

The material mixture composition was put in a kneader and kneaded at a rotational speed of 40 rpm for 10 minutes at a temperature of 160°C and a pressure of 1.1 atm to prepare a mixed aggregate.

The mixed aggregate was introduced into a blender and then ground at a rotational speed of 1,500 rpm for 1 minute to prepare powder for an electrode.

The powder for an electrode was sheeted into a powder-sheeting film using a calender roll (roll diameter: 160 mm, roll temperature: 80 °C) in a roll-to-roll process. Thereafter, after the powder-sheeting film was rolled to prepare an electrode material mixture film while maintaining a gap between two calender rolls of 80 $\mu$m and driving the two rolls at a speed ratio of 1:2, the electrode material mixture film was disposed on one side of an aluminum foil (thickness: 12 $\mu$m) on which a conductive primer layer was formed, and lamination was performed using a roll press maintained at 80°C to prepare a dry electrode.

In this case, porosity of the electrode material mixture film was 23.5%.

With respect to the expandable carbon nanotubes, bundle-type carbon nanotubes (BET specific surface area: 256 m$^2$/g, bulk density: 0.110 g/cc, volume cumulative average particle diameter: 530 $\mu$m) including multi-walled carbon nanotube units (average diameter: 10 nm) were introduced into a disintegration device (Galaxy Jet Mill, JEM), and then disintegrated in a solvent-free state to prepare the expandable carbon nanotubes.

In this case, a rotational speed of a rotor included in the disintegration device was 5,400 rpm, and an injection pressure of an injection nozzle included in the disintegration device was 5.2 bar.

### Example 2: Preparation of Dry Electrode

A dry electrode was prepared in the same manner as in Example 1 except that 488 g of lithium nickel cobalt manganese oxide (LNF Co., Ltd.) as a positive electrode active material, 8 g of expandable carbon nanotubes as a conductive gent, and 4 g of polytetrafluoroethylene (PTFE), as a fibrillizable binder, were used.

**Comparative Example 1: Preparation of Dry Electrode**

A dry electrode was prepared in the same manner as in Example 1 except that, as a conductive agent, the expandable carbon nanotubes were not used, but bundle-type carbon nanotubes (BET specific surface area: 256 m$^2$/g, bulk density: 0.110 g/cc, volume cumulative average particle diameter: 530 $\mu$m) including multi-walled carbon nanotube units (average diameter: 10 nm) were used.

**Comparative Example 2: Preparation of Dry Electrode**

A dry electrode was prepared in the same manner as in Example 1 except that 488 g of lithium nickel cobalt manganese oxide (LNF Co., Ltd.) as a positive electrode active material, 2 g of expandable carbon nanotubes as a conductive gent, and 10 g of polytetrafluoroethylene (PTFE), as a fibrillizable binder, were used.

**Experimental Example 1: OMI (Overlap Mapping Index) Measurement**

After cross-sectional samples were prepared by ion-milling each of the dry electrodes prepared in Examples 1 and 2 and Comparative Examples 1 and 2 using Hitachi IM5000, an Overlap Mapping Index (OMI) was measured using Scanning Electron Microscope-Energy Dispersive X-ray Spectroscopy (SEM-EDS) .

Specifically, for each of the cross-sectional samples, a region where a carbon element was detected and a region where a fluorine element was detected were respectively mapped using SEM-EDS.

More specifically, mapping results including an amount of each element per pixel were obtained, and an area ratio of pixels, in which the amount of the fluorine element was 15 wt% or more in a measurement region, and an area ratio of pixels, in which 30 wt% or more of the carbon element and 15 wt% or more of the fluorine element were simultaneously satisfied, were extracted through image processing.

In this case, the area ratio of the pixels, in which the amount of the fluorine element was 15 wt% or more, was expressed as FAR, as defined by Equation 1 according to the present invention, and the area ratio of the pixels, in which the amount of the carbon element was 30 wt% or more and the amount of the fluorine element was 15 wt% or more, was expressed as CFAR, as defined by Equation 1 according to the present invention.

Instruments and measurement conditions used for the SEM-EDS were as follows.

1) Instrument (SEM): Apreo2S (Thermo Fisher Scientific Inc.)
2) Instrument (EDS): Extreme (Oxford Instruments)
3) Accelerating voltage:3 kV
4) Incident current: 1.6 nA
5) Working distance: 5 mm
6) Magnification: 3000x
7) Area: 1024 pixels x 400 pixels
8) Detected elements: C, O, F, Ni
9) Pixel size: 135nm x 135nm

An OMI derived from the measured CFAR and FAR is presented in Table 1 below.

[Table 1]

|  | CFAR (%) | FAR (%) | OMI (%) |
|---|---|---|---|
| Example 1 | 2.9 | 11.5 | 25.1 |
| Example 2 | 3.1 | 11.1 | 28.4 |
| Comparative Example 1 | 1.0 | 6.9 | 15.2 |
| Comparative Example 2 | 2.4 | 14.4 | 16.5 |

**Experimental Example 2: Measurement of Tensile Strength of Electrode Material Mixture Film**

After the electrode material mixture films prepared in Examples 1 and 2 and Comparative Example 1 were cut into a size of 50 mm (MD direction) x 10 mm (TD direction), tensile strength was measured using UTM equipment (ZwickRoell AG) according to the ASTM 638 method, wherein the measurement was performed under conditions of a pre-load of 0.01 kg/cm and a speed of 50 mm/min. In this case, the tensile strength (MPa) was obtained as the maximum value of a force applied until the sample did not break in each of the MD and TD directions.

The measured tensile strength is presented in Table 2 below.

### Experimental Example 3: Electrode Layer Resistivity and Interfacial Resistivity Measurement

**1) Electrode Layer Resistivity Measurement:** After each of the dry electrodes prepared in Examples 1 and 2 and Comparative Examples 1 and 2 was cut into a size of 30 mm x 50 mm, a current of 100 μA was applied to the electrode using a multiprobe (MP) resistance measurement method, a resistivity value (Qcm) at an arbitrary point inside the electrode material mixture film was measured six times by a potential difference measured between 46 probes, and a mean value and a standard deviation thereof were then calculated.
Measurement results are presented in Table 3 below.

**2) Interfacial Resistivity Measurement:** After each of the dry electrodes prepared in Examples 1 and 2 and Comparative Examples 1 and 2 was cut into a size of 30 mm x 50 mm, a current of 100 μA was applied to the electrode using a MP resistance measurement method, an electrical resistivity value ($\Omega cm^2$) at an arbitrary point between the electrode material mixture film and the current collector was measured six times by a potential difference measured between 46 probes, and a mean value and a standard deviation thereof were then calculated.

Measurement results are presented in Table 3 below.

An instrument used in the resistance measurement was Electrode Resistance Measurement System, RM2610 by Hioki E.E. Corporation.

[Table 2]

|  | Electrode material mixture film |
|---|---|
|  | Tensile strength (MPa) |
| Example 1 | 0.46 |
| Example 2 | 0.40 |
| Comparative Example 1 | 0.33 |

[Table 3]

|  | Electrode layer resistivity ($\Omega cm$) | | | Interface resistivity ($\Omega cm^2$) | | |
|---|---|---|---|---|---|---|
|  | Mean value ($\Omega cm$) | Standard deviation ($\Omega cm$) | Standard deviation /mean value (%) | Mean value ($\Omega cm^2$) | Standard deviation ($\Omega cm^2$) | Standard deviation / mean value (%) |
| Example 1 | 6.56 | 0.88 | 13.34 | $4.85 \times 10^{-2}$ | $3.60 \times 10^{-3}$ | 7.42 |
| Example 2 | 3.82 | 0.65 | 17.02 | $3.19 \times 10^{-2}$ | $3.20 \times 10^{-3}$ | 10.03 |
| Comparative Example 1 | 8.18 | 4.26 | 52.07 | $1.14 \times 10^{-1}$ | $3.35 \times 10^{-2}$ | 29.39 |
| Comparative Example 2 | 703.82 | 109.52 | 15.56 | $9.33 \times 10^{-1}$ | $1.80 \times 10^{-1}$ | 19.28 |

Referring to Tables 2 and 3, with respect to Examples 1 and 2 in which the OMI represented by Equation 1 according to the present invention satisfied the range intended by the present invention, a degree of variation in electrode layer resistivity (standard deviation/mean value) was at the same level or less than that of Comparative Examples 1 and 2, and since a degree of variation in interfacial resistivity (standard deviation/average value) was small, it may be confirmed that Examples 1 and 2 were excellent in terms of conductivity uniformity of the electrode.

Also, with respect to Examples 1 and 2 in which the OMI represented by Equation 1 according to the present invention satisfied the range intended by the present invention, it may be confirmed that excellent electrical conductivity was achieved because the mean values of the electrode layer resistivity and the interface resistivity were lower than those of Comparative Examples 1 and 2.

That is, in a case in which the OMI represented by Equation 1 according to the present invention satisfied the range intended by the present invention, it may be confirmed that both uniformity and electrical conductivity of the electrode were balanced and excellent while tensile strength above a certain level may be achieved to ensure excellent tensile properties and processability. Therefore, when subsequently preparing a secondary battery using the dry electrode according to the present invention, excellent life characteristics and output characteristics may be achieved.

**Claims**

1. A dry electrode comprising:

   a current collector; and an electrode material mixture film,
   wherein the electrode material mixture film comprises an electrode active material, a conductive agent, and a binder having a three-dimensional fiber network structure, and
   the electrode material mixture film has an overlap mapping index (OMI) represented by Equation 1 of 17 or more:

$$[\text{Equation 1}]$$

$$\text{OMI} = \{(\text{CFAR})/(\text{FAR})\} \times 100$$

   wherein, in Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using scanning electron microscopy-energy dispersive X-Ray spectroscopy (SEM-EDS), and FAR is an area ratio of pixel regions in which 15 wt% or more of the fluorine element is detected when analyzing the element contents within the pixels of the cross section of the electrode material mixture film using the SEM-EDS.

2. The dry electrode of claim 1, wherein the electrode material mixture film has the OMI represented by Equation 1 of 23 to 27:

$$[\text{Equation 1}]$$

$$\text{OMI} = \{(\text{CFAR})/(\text{FAR})\} \times 100$$

   wherein, in Equation 1, CFAR is an area ratio of pixel regions in which 30 wt% or more of a carbon element and 15 wt% or more of a fluorine element are simultaneously detected when analyzing element contents within pixels of a cross section of the electrode material mixture film using scanning electron microscopy-energy dispersive X-Ray spectroscopy (SEM-EDS), and FAR is an area ratio of pixel regions in which 15 wt% or more of the fluorine element is detected when analyzing the element contents within the pixels of the cross section of the electrode material mixture film using the SEM-EDS.

3. The dry electrode of claim 1, wherein the CFAR is in a range of 2% to 10%.

4. The dry electrode of claim 1, wherein the FAR is in a range of 1% to 20%.

5. The dry electrode of claim 1, wherein the electrode material mixture film has a tensile strength of 0.30 MPa to 0.70 MPa.

6. The dry electrode of claim 1, wherein the electrode material mixture film has an elongation of 1.5% to 5.5%.

7. The dry electrode of claim 1, wherein the electrode material mixture film has an electrode layer resistivity of 500 $\Omega$cm or less.

8. The dry electrode of claim 1, wherein the electrode material mixture film has an interfacial resistivity of $9 \times 10^{-1} \Omega$cm$^2$ or less.

9. The dry electrode of claim 1, wherein the conductive agent comprises expandable carbon nanotubes.

10. The dry electrode of claim 9, wherein the expandable carbon nanotube comprises a multi-walled carbon nanotube unit.

11. The dry electrode of claim 10, wherein an average diameter of the multi-walled carbon nanotube unitis in a range of 5 nm to 200 nm.

12. The dry electrode of claim 10, wherein a Brunauer-Emmett-Teller (BET) specific surface area of the multi-walled carbon nanotube unitis in a range of 50 $m^2$/g to 500 $m^2$/g.

13. The dry electrode of claim 10, wherein the multi-walled carbon nanotube unit has three or more graphene layers arranged in parallel with respect to an axis of the multi-walled carbon nanotube unit.

14. A lithium secondary battery comprising the dry electrode of claim 1.

[FIG. 1]

[FIG. 2]

[FIG. 3]

[FIG. 4]

[FIG. 5]

[FIG. 6]

5.0kV 14.2mm x2.00k SE(M)　　　20.0um

[FIG. 7]

5.0kV 15.1mm x2.00k SE(M)　　　20.0um

## INTERNATIONAL SEARCH REPORT

| International application No. |
| --- |
| **PCT/KR2025/008441** |

| A. | CLASSIFICATION OF SUBJECT MATTER |
| --- | --- |

**H01M 4/62**(2006.01)i; **C01B 32/158**(2017.01)i; **H01M 4/13**(2010.01)i; **H01M 10/052**(2010.01)i; **H01M 4/04**(2006.01)i; **C01B 32/174**(2017.01)i; **H01M 4/136**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/62(2006.01); H01G 11/86(2013.01); H01M 10/052(2010.01); H01M 4/13(2010.01); H01M 4/131(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 건식 전극(dry electrode), 집전체(current collector), 전극 합재 필름(electrode composite film), 도전재(conductive agent), 3차원 섬유 네트워크 구조(3D fiber network structure), 바인더(binder), 탄소(carbon), 플루오린(fluorine), 면적 비율(area ratio)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116936735 A (YONGJIANG LABORATORY) 24 October 2023 (2023-10-24)<br>abstract; claims 1, 3, 4, 8, 10 | 1-14 |
| A | KR 10-2022-0101302 A (LG ENERGY SOLUTION, LTD.) 19 July 2022 (2022-07-19)<br>abstract; claims 1-17 | 1-14 |
| A | US 2021-0265634 A1 (FASTCAP SYSTEMS CORPORATION) 26 August 2021 (2021-08-26)<br>abstract; claims 1-30 | 1-14 |
| A | KR 10-2024-0054956 A (LG ENERGY SOLUTION, LTD.) 26 April 2024 (2024-04-26)<br>abstract; claims 1-20 | 1-14 |
| A | PARK, G. et al. Solvent-Free Processed Cathode Slurry with Carbon Nanotube Conductors for Li-Ion Batteries. Nanomaterials. 2023, vol. 13, thesis no.: 324, pp. 1-9.<br>abstract; pages 1-3 | 1-14 |

| ☐ Further documents are listed in the continuation of Box C. | ☑ See patent family annex. |
| --- | --- |

| | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 September 2025** | **22 September 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/008441**

| Patent document cited in search report | | | Publication date (day/month/year) | Patent family member(s) | | | Publication date (day/month/year) |
|---|---|---|---|---|---|---|---|
| CN | 116936735 | A | 24 October 2023 | None | | | |
| KR | 10-2022-0101302 | A | 19 July 2022 | None | | | |
| US | 2021-0265634 | A1 | 26 August 2021 | US | 11557765 | B2 | 17 January 2023 |
| | | | | US | 11848449 | B2 | 19 December 2023 |
| | | | | US | 2022-0077455 | A1 | 10 March 2022 |
| | | | | US | 2023-0015888 | A1 | 19 January 2023 |
| | | | | US | 2023-0352691 | A1 | 02 November 2023 |
| KR | 10-2024-0054956 | A | 26 April 2024 | EP | 4152445 | A1 | 22 March 2023 |
| | | | | EP | 4152445 | B1 | 01 January 2025 |
| | | | | EP | 4475233 | A1 | 11 December 2024 |
| | | | | US | 12002962 | B2 | 04 June 2024 |
| | | | | US | 2023-0042207 | A1 | 09 February 2023 |
| | | | | US | 2024-0274823 | A1 | 15 August 2024 |
| | | | | US | 2025-0192183 | A1 | 12 June 2025 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240079211

- KR 1020240079212